# EUROPEAN PATENT APPLICATION

(11) **EP 4 621 738 A1**
(43) Date of publication of application: **24.09.2025**
(21) Application number: 24164459.0
(22) Date of filing: 19.03.2024
(51) Int. Cl.: G06V 20/60, G06T 7/73

(54) **DETECTING MIRROR**

(71) Applicant: Koninklijke Philips N.V., 5656 AG Eindhoven (NL)
(72) Inventor: VAN DEN DUNGEN, Wilhelmus Andreas Marinus Arnoldus Maria, Eindhoven (NL)
(74) Representative: Philips Intellectual Property & Standards

(57) **Abstract**

Proposed concepts thus aim to provide schemes, solutions, concepts, designs, methods and systems pertaining to detecting the presence of a mirror. In particular, embodiments aim to provide a system for detecting the presence of a mirror by matching the motion of an object captured by an optical sensor array of a device to the motion of the device itself. In other words, it is proposed that by determining the motion of an object captured in video data (taken by the device) and separately determining the motion of the device (via a motion sensor), the two motions can then be analysed (e.g., compared to one another). If the two motions are found to match, this would indicate that the object captured in the video data is in fact the device itself, via a mirror, and this can thus be used to detect the presence of a mirror in front of the device.

## Description

### FIELD OF THE INVENTION

This invention relates to the field of detecting mirrors.

### BACKGROUND OF THE INVENTION

Inspired by the lack of location information in smart home eco systems, and as homes and devices become smarter, interaction models that enable new use cases are becoming possible. Especially with open standards like Matter, different interaction combinations become realistic for devices, including personal care devices. For example, lighting settings can be optimized for specific personal care routines, personal care onset can be detected, and smart mirror displays can be interacted with.

In modern smart homes, it is expected that more smart home devices will enter homes, and for example, be used during a personal care routine in front of a mirror. Smart lights, smart mirrors, air conditioners, and a vast array of personal care devices can be used to work together to optimize the personal care routine and user experience.

All these devices need to be setup and optimized, and not only their own settings need to be set, but also those of the surrounding smart devices used during the routine. A mirror (smart or not) is likely to be a centrally important device during a personal care routine and next to / in front of the user while they are performing the personal care routine. Furthermore, a variety of devices can use the mirror to view a user and/or themselves from another angle, or to more accurately map a room. However, in order to utilize a mirror for any purpose, the mirror must first be detected.

### SUMMARY OF THE INVENTION

The invention is defined by the claims.

According to examples in accordance with an aspect of the invention, there is provided a system for detecting the presence of a mirror.

The system comprises: a device comprising: an optical sensor array configured to capture video data of an object of interest moving across a plurality of frames of the video data; and a motion sensor configured to sense first motion parameters of the device; and a processor configured to: determine second motion parameters of the object of interest based on movement of the object of interest in the video data; analyse the first motion parameters and the second motion parameters; and detect the presence of a mirror based on the analysis result.

Proposed concepts thus aim to provide schemes, solutions, concepts, designs, methods and systems pertaining to detecting the presence of a mirror. In particular, embodiments aim to provide a system for detecting the presence of a mirror by matching the motion of an object captured by an optical sensor array of a device (i.e., potentially its reflection) to the motion of the device itself.

In other words, it is proposed that by determining the motion of an object captured in video data (taken by a device) and separately determining the motion of the device itself (via a motion sensor), the two motions can then be analysed (e.g., compared to one another). If the two motions are found to match, this would indicate that the object captured in the video data is in fact the device itself, via a mirror, and this can thus be used to detect the presence of a mirror in front of the device.

By including an optical sensor array and motion sensor in the device itself, an efficient and effective manner of being able to detect the presence of a mirror is provided without the need for any significant external hardware. The detected mirror can then be used to reliably sense, for example, a personal care routine via the mirror, or initiate the onset of a personal care routine.

The inventors have realised that in order to detect a mirror, a device only needs to include a relatively inexpensive and simple optical sensor array and a relatively inexpensive and simple motion sensor. An external or internal processor can then be used to analyse the video data and the motion parameters in order to efficiently and/or effectively detect the presence of a mirror. Further checks can then be used to confirm and cross-validate the presence of a mirror, enhancing the accuracy and reliability of the detection. This would be particularly useful in the field of personal care devices which are often used in front of a mirror.

In some embodiments, analysing the first motion parameters and the second motion parameters may comprise determining a relationship between the first motion parameters and the second motion parameters. For instance, if the first and second motion parameters are found to match each other (within a certain tolerance), this can then inform the detection of the presence of a mirror.

In some embodiments, determining second motion parameters of the object of interest may be based on movement of the object of interest in the video data relative to an identified edge. For example, this provides an effective reference point to determine the motion parameters of the object of interest relative to. For example, the identified edge may be the edge of a mirror, such that, for example, when the device moves right, the optical sensor array also sees the reflection of the device moving right towards the edge of the mirror too.

In some embodiments, the optical sensor array may comprise a camera. A camera may be an effective optical sensor array for capturing video data of an object of interest, which can be efficiently integrated into a device.

In some embodiments, the camera may comprise at least one of an optical camera and an infrared camera. These may both provide suitable forms of camera, and for example, the infrared camera may be able to capture the user's passive infrared radiation for matching the motion of the user's hand holding the device to the motion of the device.

In some embodiments, the first and second motion parameters may comprise at least one of: velocity; acceleration; rotation; and distance moved. These parameters may all be used to match two different motions, and for example, the more that are used, the more reliable the matching is likely to be (e.g., to overcome coincidence).

In some embodiments, the first motion parameters may comprise the same parameters as the second motion parameters. This may enable more efficient and/or effective analysis of the first and second motion parameters.

In some embodiments, the processor may be further configured to identify the object of interest in the video data. For example, the processor may be configured to specifically identify the device, such that the processor can more efficiently start determining potentially relevant motion parameters, rather than for example, determining motion parameters of a wide variety of objects in the video data.

In some embodiments, the device may further comprise a light source configured to emit coded light; and wherein identifying the object of interest in the video data may comprise identifying the coded light in the video data. This may provide an efficient and effective way to allow the device to be identified in the video data.

In some embodiments, the device may further comprise a polarization detector configured to detect polarized light, wherein the processor may be configured to detect the presence of a mirror further based on whether the polarization detector detects polarized light. For example, typical mirrors are known to partially polarize unpolarized light, especially if the incoming light is close to the Brewster's angle, and thus the detection of any polarized light may be used as a check on the detection of a mirror.

In some embodiments, the device may comprise the processor. This may allow the device to detect the presence of a mirror independently and without need for any external connections.

In some embodiments, the device may comprise a personal care device. Personal care devices are often used in front of mirrors, and smart personal care devices may desire to use a mirror to observe a user and/or itself during a personal care routine.

According to another aspect of the invention, there is provided a method for detecting the presence of a mirror. The method comprising sensing first motion parameters of a device using a motion sensor of the device; capturing video data of an object of interest moving across a plurality of frames of the video data using an optical sensor array of the device; determining second motion parameters of the object of interest based on movement of the object of interest in the video data; analysing the first motion parameters and the second motion parameters; and detecting the presence of a mirror based on the analysis result.

In some embodiments, the method may further comprise analysing the first motion parameters and the second motion parameters comprises determining a relationship between the first motion parameters and the second motion parameters.

According to another aspect of the invention, there is provided a computer program comprising code means for implementing the method of any herein disclosed method when said program is run on a processing system.

Thus, there may be proposed concepts for detecting the presence of a mirror, and this may be done based on matching the motion of an optically sensed object to the directly sensed motion of an object, i.e., a device.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified block diagram of a system for detecting the presence of a mirror according to a proposed embodiment;
Fig. 2 is a block diagram of a system for detecting the presence of a mirror according to a proposed embodiment;
Fig. 3A is a diagram of a device moving in front of a mirror;
Fig. 3B is a diagram of an example of the view of a device's optical sensor array when moving in front of a mirror as shown in Fig. 3A;
Fig. 4 is a simplified flow diagram of a method for detecting the presence of a mirror according to a proposed embodiment;
Fig. 5 is a flow diagram of a method for detecting the presence of a mirror according to a proposed embodiment; and
Fig. 6 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to detecting the presence of a mirror. According to proposed concepts, a number of possible solutions may be implemented separately or jointly. That is, although these possible solutions may be described below separately, two or more of these possible solutions may be implemented in one combination or another.

Embodiments of the invention aim to provide a system for detecting the presence of a mirror. This can be achieved by matching the motion of an object captured by an optical sensor array of a device (i.e., potentially its reflection) to the motion of the device itself.

In other words, it is proposed that by determining the motion of an object captured in video data (taken by the device) and separately determining the motion of the device (via a motion sensor), the two motions can then be analysed (e.g., compared to one another). If the two motions are found to match, this would indicate that the object captured in the video data is in fact the device itself, via a mirror, and this can thus be used to detect the presence of a mirror in front of the device.

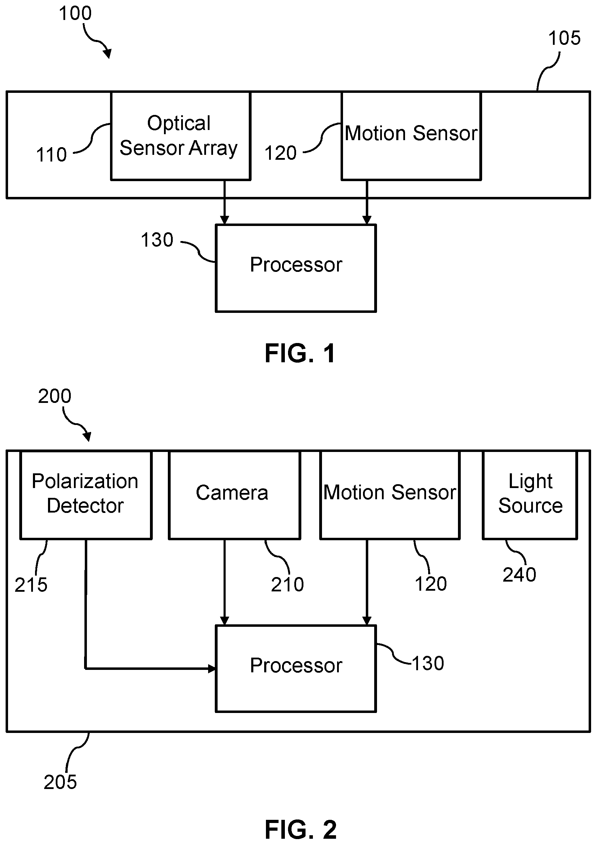

Referring now to Fig. 1, there is depicted a simplified block diagram of a system 100 for detecting the presence of a mirror according to a proposed embodiment.

The system 100 comprises a device 105 and a processor 130. For instance, in this embodiment, the device 105 comprises a personal care device. The personal care device can comprise at least one of: a toothbrush; an electric shaver/razor; a hair dryer; a hair straightener/flat iron; a hair curler; an epilator; an electric nail file; a facial cleansing brush; a facial steamer; a blackhead remover; a manicure and pedicure set; an electric foot file; an electric callus remover; a scalp massager; an electric facial hair trimmer; a water flosser; a facial toning device; a skin tightening device; an anti-aging LED mask; an electric body massager.

In other embodiments, however, the device 105 can comprise at least one of: gym equipment; an augmented reality headset; a virtual reality headset; a security device; a robotic device; a cleaning device; a vehicle; an android; and any other suitable device which might benefit from being able to detect the presence of a mirror, as would be understood by the skilled person.

The personal care device 105 comprises an optical sensor array 110 configured to capture video data of an object of interest moving across a plurality of frames of the video data. For instance, the video data can be understood as comprising a series of images/frames over time, i.e., a set of time-series images. For instance, the video data can comprise at least three images/frames captured by the optical sensor array separated in time. For instance, video data can also be referred to as visual motion data or optically-sensed data or time-series optical data.

The personal care device 105 also comprises a motion sensor 120 configured to sense first motion parameters of the personal care device. For instance, the motion sensor can comprise at least one of: an inertial measurement unit (IMU); an accelerometer; a tilt sensor; a magnetometer; and a gyroscope.

The processor 130 of the system 100 is configured to determine second motion parameters of the object of interest based on movement of the object of interest in the video data. For instance, the processor 130 can be situated externally to the personal care device 105 and be provided with the video data by a wired or wireless connection, as would be understood by the skilled person. For example, the processor 130 can be situated in a smart device already owned by a user, such as a smartphone or tablet, or it can be situated in the cloud, or it can be situated in the personal care device 105 itself.

The first and second motion parameters can comprise at least one of: velocity; acceleration; rotation; and distance moved. These parameters may all be used to match two different motions, and for example, the more that are used, the more reliable the matching is likely to be (e.g., to overcome coincidence). The first motion parameters can also comprise the same parameters as the second motion parameters. This can enable more effective analysis of the first and second motion parameters, although it is not essential for the functioning of the invention, as would be understood by the skilled person.

For example, the processor 130 can be further configured to first identify the object of interest in the video data before determining the second motion parameters. For example, the processor can be configured to specifically identify the (personal care) device, such that the processor can more efficiently start determining potentially relevant motion parameters, rather than for example, determining motion parameters of a wide variety of objects in the video data. In some embodiments, a neural network can be used to identify the object of interest, e.g., to identify a predetermined object of interest, e.g., to identify the (personal care) device.

In this embodiment, determining second motion parameters of the object of interest is based on movement of the object of interest in the video data relative to an identified edge, although this is not essential to the working of the invention, as would be understood by the skilled person. For example, this would provide an effective reference point to determine the motion parameters of the object of interest relative to. For example, the identified/found edge could be the edge of a mirror, such that, for example, when the personal care device moves right, the optical sensor array also sees the reflection of the personal care device moving right towards the edge of the mirror too.

For instance, in some embodiments, the processor can be further configured to identify an edge in the video data, for instance, essentially detecting a thin, linear object. This could be the edge of a mirror, of course. Having found an edge, the movement of the object of interest can then be determined relative to this identified edge, e.g., whether it is getting closer or further away from the edge (of the potential mirror).

In other embodiments, determining second motion parameters of the object of interest can be based on movement of the object of interest in the video data relative to a background and/or relative to other objects found in the video data. The same principles as outlined for an identified edge would thus similarly apply.

The processor 130 is also configured to analyse the first motion parameters and the second motion parameters and detect the presence of a mirror based on the analysis result. For instance, analysing the first motion parameters and the second motion parameters can comprise determining a relationship between the first motion parameters and the second motion parameters. For instance, if the first and second motion parameters are found to match each other (within a certain tolerance, e.g., 5 or 10%), then this can inform the detection of the presence of a mirror.

For example, the analysis of the first and second motion parameters can take the form of a comparison of the parameters' relative/proportional changes over time (e.g., between the frames) such that they can be more reliably compared. This is in contrast to comparing the absolute values of the first and second motion parameters. The absolute values of the first motion parameters may be inaccurate due to the perspective of the optical sensor array in relation to the potential mirror, however, the relative relationships of the parameters over time will be preserved, i.e., changing direction, accelerating, etc.

For example, in some embodiments, the first and second motion parameters can be used to determine first and second 3D motion paths respectively. For example, analysing the first motion parameters and the second motion parameters can comprise generating a first 3D motion path based on the first motion parameters and generating a second 3D motion path based on the second motion parameters. The first 3D motion path can then be compared to the second 3D motion path and if they match (within a certain tolerance, e.g., 5 or 10%), then the presence of a mirror can be detected.

The main principle of the present invention is thus the matching of mirror image motion with device motion. It would be apparent to the skilled person that different sensor embodiments could be used to observe the mirror together with a motion sensor in the device, thus facilitating the detection of a mirror in front of the device.

Being able to detect that a device, e.g., a personal care device, is in front of a mirror enables a myriad of use case optimisations. For example, settings for smart lights could be optimised for a specific personal care routine if the corresponding personal care device detects that it is in front of a mirror; onset of personal care can be detected; and/or if the mirror is a smart mirror, it can then appropriately interact with the personal care device and the user. These are provided purely as a few examples and the skilled person would understand that the detection of a mirror could be used for a wide array of purposes. For example, it could be used to improve the accuracy of motion sensors.

Referring now to Fig. 2, there is depicted a block diagram of a system 200 for detecting the presence of a mirror according to a proposed embodiment. The motion sensor 120 and processor 130 are substantially the same as those described in relation to system 100 of Fig. 1. However, in this embodiment, the device 205 comprises the processor 130. This allows the device 205 to detect the presence of a mirror independently and without need for any external connections.

In this embodiment, the optical sensor array comprises a camera 210. A camera is an effective optical sensor array for capturing video data of an object of interest, which can be efficiently integrated into the device 205. In some embodiments, the camera 210 can be a wide-angle camera, such that it can capture the object of interest in a wider range of circumstances (i.e., with the device in a wider range of positions and orientations relative to the mirror). In some embodiments, the camera 210 can comprise at least one of an optical camera and an infrared camera. These can both provide suitable forms of a camera, as the skilled person would understand. For example, the infrared camera can capture the user's passive infrared radiation for matching the motion of the user's hand holding the device to the motion of the device.

In this embodiment, the device 205 further comprises a light source 240 configured to emit coded light (e.g., light emitted in a predetermined pattern and/or of a predetermined colour). The processor 130 can then be configured to identify the object of interest in the video data by identifying the coded light in the video data. This can provide an efficient and effective way of allowing the device to be identified in the video data.

In this embodiment, the device 205 also comprises a polarization detector 215 configured to detect polarized light, wherein the processor 130 is configured to detect the presence of a mirror further based on whether the polarization detector detects polarized light. For example, typical mirrors are known to partially polarize unpolarized light, especially if the incoming light is close to the Brewster's angle, and thus the detection of any polarized light can be used as a check on the detection of a mirror. For instance, the processor 130 can be configured to only detect the presence of a mirror based on a positive analysis of the motion parameters (i.e., the motion parameters matching) and the detection of polarized light. In another example, the detection of polarized light can be used to increase the tolerance within which the first and second motion parameters need to match.

In an example, a personal care device (a shaver) is being used in front of a mirror (e.g., a smart or non-smart mirror) in a bathroom. The shaver has an integrated (spectral) sensor (camera) in the back of the shaver facing the mirror and designed to measure skin properties of the user via the mirror. Before the shaver starts measuring the skin properties of the user, however, it must know that the device and user are in front of a mirror. The sensor of the shaver can thus capture video data and determine motion parameters of an object of interest in the video data (i.e., its own reflection). Internal motion sensors in the shaver can then also calculate the same motion parameters as determined for the object of interest. The two sets of motion parameters can then be compared, and if they match, then the mirror is detected. The motion of the optical sensor itself is compensated and only motion sensed via the mirror image of the shaver is matched.

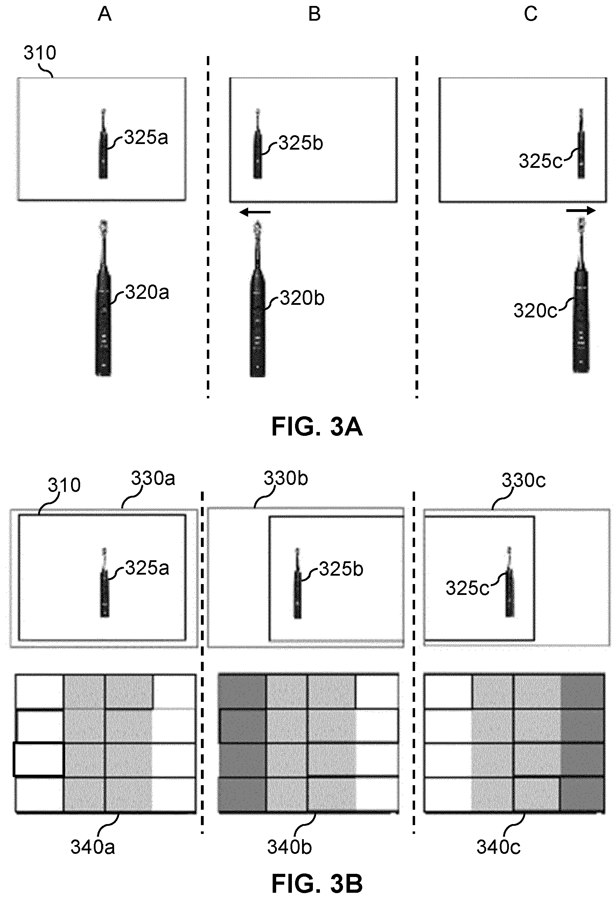

Referring now to Fig. 3A, there is depicted a diagram of a device 320 moving in front of a mirror 310.

For instance, in frame A, the device (a toothbrush) 320a is stationary in front of a mirror 310, and its reflection 325a can be seen in the middle of said mirror. In frame B, the device 320b is moving left and its reflection 325b can thus be seen to be moving left towards the edge of the mirror too. In frame C, the device 320c is moving right and its reflection 325c can thus be seen to be moving right towards the edge of the mirror too.

Referring now to Fig. 3B, there is depicted a diagram of an example of the view of the device's 320 optical sensor array when moving in front of a mirror 310 as shown in Fig. 3A.

For instance, in frame A, the optical sensor array of the device 320a has a view 330a of the device's reflection 325a in the middle of the mirror 310. In a low-definition representation 340a of the view 330a (representative of the actual data a low-definition optical sensor array might obtain) the light grey blocks represent detection of the reflection of the device (the object of interest). In frame B, the optical sensor array of the device 320b has a view 330b of the device's reflection 325b moving to the left and approaching the left edge of the mirror. In the low-definition representation 340b of the view 330b, the dark grey blocks represent detection of the edge of the mirror, which the reflection of the device (the light grey blocks) have now moved towards. In frame C, the optical sensor array of the device 320c has a view 330c of the device's reflection 325c moving to the right and approaching the right edge of the mirror. In the low-definition representation 340c of the view 330c, it can be seen that the reflection of the device has now moved towards the right edge of the mirror. Thus, the motion of the reflection of the device (the object of interest relative to an identified edge (of the mirror)) across the frames A-C can be matched to a motion detected by a motion sensor in the device 320 itself.

In other words, it can be seen that the device motion in the optical sensor array view is different compared to the motion of the mirror (edges). The motion of the mirror edges matches the real device motion (mirrored). Rotation will also have motion effects, and this can also be matched with the sensor view. As explained, motion matching can be done with a variety of different sensor technologies (for example, an optical sensing array, a camera, optical sensors using the polarizing effect of the mirror, passive or active IR sensors which could detect human / user motion in the mirror, integrating a light source into the device to help identify the device in the sensor's view, etc.) The present invention facilitates mirror detection with minimum calculation and resource needs in the device.

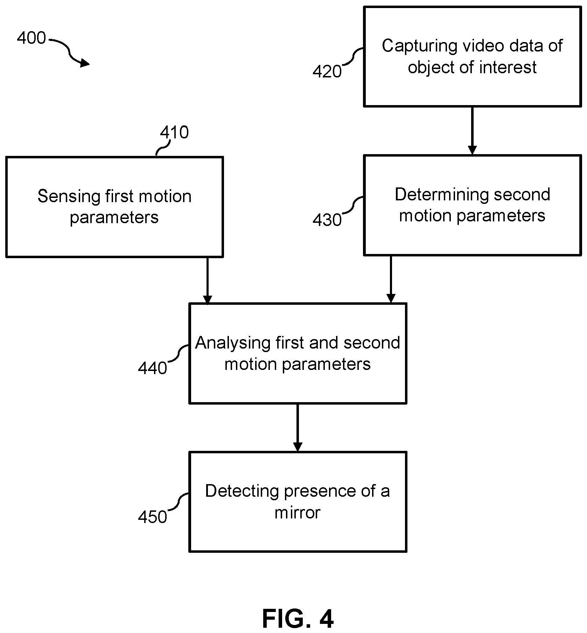

Referring now to Fig. 4, there is depicted a simplified flow diagram of a method 400 for detecting the presence of a mirror according to a proposed embodiment. In step 410, first motion parameters of a device are sensed using a motion sensor of the device. In step 420, video data of an object of interest moving across a plurality of frames of the video data is captured using an optical sensor array of the device. Step 430 comprises determining second motion parameters of the object of interest based on movement of the object of interest in the video data. Step 440 comprises analysing the first motion parameters and the second motion parameters and step 450 comprises detecting the presence of a mirror based on the analysis result.

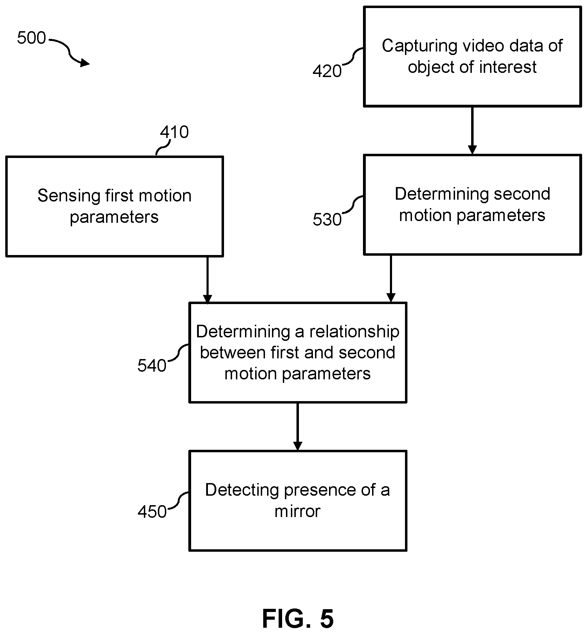

Referring now to Fig. 5, there is depicted a flow diagram of a method 500 for detecting the presence of a mirror according to a proposed embodiment. Steps 410, 420 and 450 are substantially the same as described in relation to method 400 of Fig. 4.

Step 530 comprises determining second motion parameters of the object of interest based on movement of the object of interest in the video data relative to an identified edge. Step 540 comprises determining a relationship between the first motion parameters and the second motion parameters.

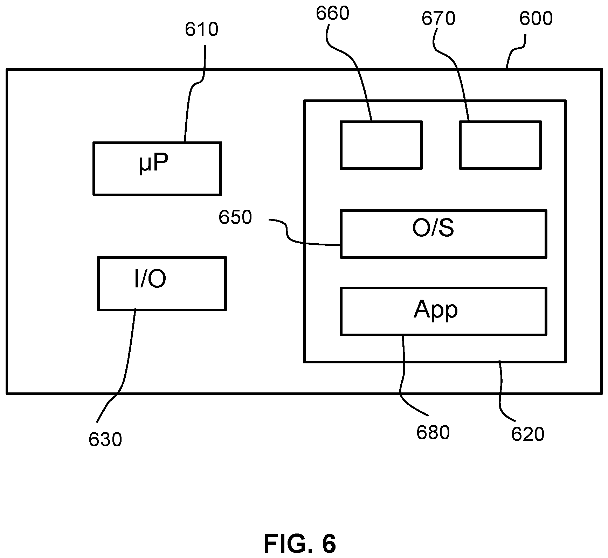

Fig. 6 illustrates an example of a computer 600 within which one or more parts of an embodiment may be employed. Various operations discussed above may utilize the capabilities of the computer 600. In this regard, it is to be understood that system functional blocks can run on a single computer or may be distributed over several computers and locations (e.g. connected via internet).

The computer 600 includes, but is not limited to, PCs, workstations, laptops, PDAs, palm devices, servers, storages, and the like. Generally, in terms of hardware architecture, the computer 600 may include one or more processors 610, memory 620 and one or more I/O devices 630 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 610 is a hardware device for executing software that can be stored in the memory 620. The processor 610 can be virtually any custom made or commercially available processor, a central processing unit (CPU), a digital signal processor (DSP), or an auxiliary processor among several processors associated with the computer 600, and the processor 610 may be a semiconductor based microprocessor (in the form of a microchip) or a microprocessor.

The memory 620 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 620 may incorporate electronic, magnetic, optical, and/or other types of storage media. Note that the memory 620 can have a distributed architecture, where various components are situated remote from one another, but can be accessed by the processor 610.

The software in the memory 620 may include one or more separate programs, each of which comprises an ordered listing of executable instructions for implementing logical functions. The software in the memory 620 includes a suitable operating system (O/S) 650, compiler 660, source code 670, and one or more applications 680 in accordance with exemplary embodiments. As illustrated, the application 680 comprises numerous functional components for implementing the features and operations of the exemplary embodiments. The application 680 of the computer 600 may represent various applications, computational units, logic, functional units, processes, operations, virtual entities, and/or modules in accordance with exemplary embodiments, but the application 680 is not meant to be a limitation.

The operating system 650 controls the execution of other computer programs, and provides scheduling, input-output control, file and data management, memory management, and communication control and related services. It is contemplated by the inventors that the application 680 for implementing exemplary embodiments may be applicable on all commercially available operating systems.

Application 680 may be a source program, executable program (object code), script, or any other entity comprising a set of instructions to be performed. When a source program, then the program is usually translated via a compiler (such as the compiler 660), assembler, interpreter, or the like, which may or may not be included within the memory 620, so as to operate properly in connection with the O/S 650. Furthermore, the application 680 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 630 may include input devices such as, for example but not limited to, a mouse, keyboard, scanner, microphone, camera, etc. Furthermore, the I/O devices 630 may also include output devices, for example but not limited to a printer, display, etc. Finally, the I/O devices 630 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 630 also include components for communicating over various networks, such as the Internet or intranet.

If the computer 600 is a PC, workstation, intelligent device or the like, the software in the memory 620 may further include a basic input output system (BIOS) (omitted for simplicity). The BIOS is a set of essential software routines that initialize and test hardware at start-up, start the O/S 650, and support the transfer of data among the hardware devices. The BIOS is stored in some type of read-only-memory, such as ROM, PROM, EPROM, EEPROM or the like, so that the BIOS can be executed when the computer 600 is activated.

When the computer 600 is in operation, the processor 610 is configured to execute software stored within the memory 620, to communicate data to and from the memory 620, and to generally control operations of the computer 600 pursuant to the software. The application 680 and the O/S 650 are read, in whole or in part, by the processor 610, perhaps buffered within the processor 610, and then executed.

When the application 680 is implemented in software it should be noted that the application 680 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 680 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The systems of Figs. 1 and 2, and the methods of Figs. 4 and 5, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 6 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention.

## Claims

1. A system (100) for detecting the presence of a mirror, the system comprising:
a device (105) comprising:
an optical sensor array (110) configured to capture video data of an object of interest moving across a plurality of frames of the video data; and
a motion sensor (120) configured to sense first motion parameters of the device; and
a processor (130) configured to:
determine second motion parameters of the object of interest based on movement of the object of interest in the video data;
analyse the first motion parameters and the second motion parameters; and
detect the presence of a mirror based on the analysis result.

2. The system of claim 1, wherein analysing the first motion parameters and the second motion parameters comprises determining a relationship between the first motion parameters and the second motion parameters.

3. The system of claim 1 or 2, wherein determining second motion parameters of the object of interest is based on movement of the object of interest in the video data relative to an identified edge.

4. The system of any of claims 1 to 3, wherein the optical sensor array comprises a camera (210).

5. The system of claim 4, wherein the camera (210) comprises at least one of an optical camera and an infrared camera.

6. The system of any of claims 1 to 5, wherein the first and second motion parameters comprise at least one of: velocity; acceleration; rotation; and distance moved.

7. The system of any of claims 1 to 6, wherein the first motion parameters comprise the same parameters as the second motion parameters.

8. The system of any of claims 1 to 7, wherein the processor (130) is further configured to identify the object of interest in the video data.

9. The system of claim 8, wherein the device (205) further comprises:
a light source (240) configured to emit a coded light; and
wherein identifying the object of interest in the video data comprises identifying the coded light in the video data.

10. The system of any of claims 1 to 9, wherein the device (205) further comprises a polarization detector (215) configured to detect polarized light, wherein the processor (130) is configured to detect the presence of a mirror further based on whether the polarization detector detects polarized light.

11. The system of any of claims 1 to 10, wherein the device (205) comprises the processor (130).

12. The system of any of claims 1 to 11, wherein the device (205) comprises a personal care device.

13. A computer-implemented method (400) for detecting the presence of a mirror, the method comprising:
sensing first motion parameters (410) of a device using a motion sensor of the device;
capturing video data of an object of interest (420) moving across a plurality of frames of the video data using an optical sensor array of the device;
determining second motion parameters (430) of the object of interest based on movement of the object of interest in the video data;
analysing the first motion parameters and the second motion parameters (440); and
detecting the presence of a mirror (450) based on the analysis result.

14. The computer-implemented method of claim 13, wherein analysing the first motion parameters and the second motion parameters comprises determining a relationship between the first motion parameters and the second motion parameters (540).

15. A computer program product comprising computer program code means which, when executed on a computing device having a processing system, cause the processing system to perform all of the steps of the computer-implemented method according to any of claims 13 to 14.
